# EUROPÄISCHE PATENTANMELDUNG

(11) **EP 1 598 650 A1**
(43) Veröffentlichungstag der Anmeldung: **23.11.2005**
(21) Anmeldenummer: 05009975.3
(22) Anmeldetag: 06.05.2005
(51) Int. Cl.: G01L 9/00

(54) **Verfahren zum Herstellen eines Sensors oder Aktors sowie damit herstellbarer Sensor oder Aktor**

(30) Priorität: 19.05.2004 DE 102004024920
(71) Anmelder: Trafag AG, 8708 Männedorf (CH)
(72) Erfinder: Zeisel, Dieter, 8127 Forsch (CH); Merhar, Thomas, 8708 Männedorf (CH)
(74) Vertreter: Kastel, Stefan

(57) **Zusammenfassung**

Die Erfindung betrifft ein Verfahren zum Herstellen eines Sensors (40) oder Aktors, bei welchem ein erstes aus Keramik gebildetes Teilelement (12) oder Bauteil (14) des Sensors (40) oder Aktors mittels Hart- und/oder Aktivlöten mit einem zweiten Teilelement (16) oder Bauteil (18) verbunden wird. Um bei hoher Temperaturbeständigkeit eine langzeitstabile elektrische Verbindung zu schaffen, wird vorgeschlagen, dass das Hart- oder Aktivlot (22) zusätzlich zum Herstellen elektrischer Verbindungen (30, 32) und/oder elektrischer Leiterbahnen (30) verwendet wird. Außerdem wird ein damit herstellbarer Sensor oder Aktor beschrieben.

## Beschreibung

Die Erfindung betrifft ein Verfahren zum Herstellen eines Sensors oder Aktors, bei dem ein aus Keramik bestehendes erstes Teilelement des Sensors oder Aktors mit einem zweiten Teilelement mittels Aktivlöten verbunden wird. Außerdem betrifft die Erfindung ein insbesondere mit einem solchen Herstellverfahren herstellbaren Sensor oder Aktor.

Aus der EP 1 255 099 A2 ist ein Drucksensor zur Verwendung bei hohen Temperaturen beschrieben, der zur Temperaturabschirmung ein Keramikelement aufweist, welches mittels Aktivlot an ein Metallteil angelötet ist. Dieses Dokument beschreibt außerdem ein Verfahren zum Herstellen eines solchen Drucksensors, wobei Keramik-Teilelemente mit Metall-Teilelementen mittels Hartlöten aneinander verbunden werden.

Unter Hartlöten wird ein Löten mit einer Löttemperatur von oberhalb etwa 450°C verstanden.

Aktivlote werden zum direkten Löten von Keramik-Keramik- und Keramik-Metall-Verbindungen eingesetzt. Um eine gute Benetzung von Keramikwerkstoffen zu erreichen, werden den Aktivloten Legierungselemente zugegeben, die an der Grenzfläche Lot-Keramik eine Reaktionsschicht bilden, durch die die Verbindung herbeigeführt wird. Aktivlote können auch zum Löten von Diamant, Saphir, Rubin und Grafit eingesetzt werden. Auf dem Markt erhältliche Aktivlote basieren auf Silber- bzw. Silber-Kupfer-Legierungen und enthalten als aktives Element Titan in unterschiedlichen Konzentrationen. Für Aktivlote ist eine minimale Löttemperatur von 850 °C notwendig, um eine Verbindung mit der Keramik zu erreichen. Höhere Löttemperaturen können das Benetzungsverhalten verbessern. Als Lötatmosphären werden reines Argon oder Vakuum eingesetzt.

Unter Aktivlöten wird das direkte Löten von Keramik-Keramik- und Keramik-MetallVerbindungen verstanden. Die zum Aktivlöten erforderlichen Aktivlote enthalten i.d.R. Titan, das durch eine Reaktion an der Grenzfläche Lot-Keramik die Benetzung ermöglicht

Der besondere Vorteil solcher Verbindungen liegt in der außergewöhnlich hohen Festigkeit und Temperaturbeständigkeit.

Bei dem aus der EP 1 255 099 A2 bekannten Sensor dienen die verschiedenen Keramik-Teilelemente zur Wärmeabschottung. Ein eine Auslenkung einer Druckmembran erfassendes Biegeelement liegt abgeschirmt durch diese Keramikelemente und mittels Aktivlot damit verbunden außerhalb eines Hochtemperaturbereiches. Dehnmessstreifen oder dergleichen Wandlereinrichtungen, die eine Auslenkung in elektrisch verarbeitbare Signale umwandeln, werden mittels üblicher Verbindungstechniken kontaktiert. Diese Verbindungen sind wie die Auswerteelektronik empfindlich gegenüber hohen Temperaturen, was jedoch bei dem bekannten Drucksensor unkritisch ist, da sie durch das Keramikelement abgeschirmt sind. Diese elektrischen Verbindungen werden nach dem Aktivlotprozess in üblichen Verfahren hergestellt.

Aufgabe der Erfindung ist es, ein Verfahren zum Herstellen eines Sensors oder Aktors, welcher wenigstens ein Bauteil aus Keramik und ein damit zu verbindendes weiteres Bauteil sowie elektrische Verbindungen aufweist, zu vereinfachen. Es soll insbesondere auch der Komplettaufbau des Sensors oder Aktors vereinfacht werden und dennoch eine hohe Temperaturfestigkeit geschaffen werden. Außerdem soll der Sensor robuster und insgesamt langzeitstabiler gemacht werden.

Diese Aufgabe wird durch ein Verfahren mit den Schritten des Anspruches 1 bzw. einen Aktor oder Sensor mit den Merkmalen des Nebenanspruches gelöst.

Vorteilhafte Ausgestaltungen der Erfindung sind Gegenstand der Unteransprüche.

Allgemein geht es bei der Erfindung um Keramik-Metallverbindung sowie um Keramik-Keramik-Verbindungen für Bauelemente wie Aktoren oder Sensoren, die für hohe Temperaturbereiche geeignet sind. Üblicherweise werden für solche Verbindungen die oben erwähnten Aktivlote verwendet. Die erfindungsgemäße Idee geht nun dahingehend, mit einem Lotschritt mehrere Verbindungen herzustellen. Erfindungsgemäß wird ein Lot zum Schaffen der Verbindung Keramik-Metall oder Keramik-Keramik und zusätzlich zum Schaffen einer elektrischen Verbindung oder von mehreren elektrischen Verbindungen verwendet. Das Aktivlot wird also nicht nur zur Flügeltechnik, das heißt zum Zusammenhalt von Keramik/Keramik oder Keramik/Metall verwendet, sondern auch für die elektrische Verbindung. Das Aktivlot stellt also auch elektrische Leitungen dar.

Beim Vorbereiten der Lot-Verbindungen mittels selektiven Auftragen des Lots kann man so einerseits die Fügestellen benetzen, andererseits aber auch Bereiche mit Lot versehen, die nach dem Erhitzungsprozess zum Aktivloten als Leiterbahnen verwendet werden. Gleichzeitig können Metallstücke wie Pins oder Kabelendhülsen oder dergleichen in die durch Aktivlot gebildeten Leiterbahnen miteingelötet werden, so dass sie sowohl elektrisch als auch mechanisch über das Aktivlot verbunden sind. So wird gleichzeitig eine elektrische Verbindung als auch eine hochfeste Fügeverbindung geschaffen, die für hohe Temperaturbereiche einsatzfähig ist.

Da eine Aktivlot-Verbindung weitaus höhere Temperaturen als normalerweise in derElektronik zum elektrischen Kontaktieren verwendete Lotverbindungen aushält, kann man die so befestigten Pins, Kabelendhülsen oder dergleichen auch mittels Verbindungstechniken an weitere Leitungen wie Drähte oder Kabel anschließen, die hohe Temperaturen benötigen. Beispielsweise könnte man Drähte an die aktiv gelöteten Anschlusselemente anschweißen, zum Beispiel mittels Mikroschweißen per Laser.

Mit dem Aktivlot lassen sich insbesondere auf einem Keramik-Substrat auch Bondpads herstellen, die dann mit den aktiven oder erfassenden Elementen wie Dehnmessstreifen oder dergleichen kontaktiert werden können.

Bei einem bevorzugten Ausführungsbeispiel wird das erste, aus Keramik bestehende Teilelement oder Bauteil als Substrat verwendet. Dieses Bauteil kann eine Plattenform oder flache Ringform oder dergleichen aufweisen. Auf einer Breitseite eines solchen flachen Bauteiles kann dann eine Verbindung mit einem zweiten Bauteil, das insbesondere aus Metall oder aus einer weiteren Keramik besteht, mittels dem Aktivlot erfolgen. Auf der gegenüberliegenden Seite kann dann eine Befestigung von Anschlusselementen oder auch die Schaffung von Anschlusselementen, insbesondere Leiterbahnen oder Bondpads, mittels Aktivlot erfolgen.

Das selektive Auftragen des Aktivlots hierfür erfolgt insbesondere bei den Leiterbahnen oder sonstigen elektrischen Anschlusselementen mittels Printtechniken, beispielsweise mittels Siebdruck oder Schablonendruck. Lötverbindungen, die der bloßen Befestigung von Keramik/Metall oder Keramik/Keramik dienen, können auch mit gröberen Verfahren, beispielsweise durch Aufpinseln oder Dispergieren oder Aufsprühen oder dergleichen erfolgen.

Nach dem Auftragen des Lots auf das Keramik-Substrat und/oder damit zu verbindenden Teile werden alle Teile zueinandergefügt und dann - beispielsweise in einem Lötofen - unter hohen Temperaturen hartgelötet, wie dies vom Prinzip her in der EP 1 255 099 A2 beschrieben ist. Es wird für weitere Einzelheiten ausdrücklich auf diese Druckschrift Bezug genommen.

Als Aktivlot kommt vorzugsweise eine Aktivlotpaste zum Einsatz, welche neben guten aktivierenden Eigenschaften auch eine hohe elektrische Leitfähigkeit, insbesondere auch im nach dem Löten vorliegenden Zustand bietet.

Gewisse elektrische Leitfähigkeiten bieten bereits Standard-Aktivlote. Eine mögliche Ldmischung ist AgCuSnTiZr.

Ein besonderer Vorteil der erfindungsgemäßen Technik zum Herstellen von elektrischen Verbindungen liegt in deren außerordentlichen Robustheit. Es hat sich bei Drucksensoren und Aktoren und sonstigen Sensoren immer wieder herausgestellt, dass der größte Schwachpunkt, der am wahrscheinlichsten zum Ausfall eines solchen Bauelementes führt, bei den elektrischen Verbindungen liegt. Solche Sensoren oder dergleichen werden oft unter rauen Bedingungen, wie beispielsweise innerhalb von Motoren eingesetzt und sind entsprechend rauen Bedingungen unterworfen. Neben hohen Temperaturen treten auch heftige Vibrationen auf. Übliche elektrische Verbindungen halten solchen Bedingungen zum Teil nicht in ausreichendem Maße stand. Der Bruch einer elektrischen Verbindung führt jedoch meist zum Totalausfall des Sensors oder Aktors.

Durch Aktivlöten kann jedoch eine sehr hohe Zugfestigkeit und auch eine sehr hohe Scherfestigkeit erzeugt werden. Diese Festigkeiten liegen zum Teil höher als die Festigkeiten der Materialien der zu verbindenden Teilelemente. Dadurch können diese elektrischen Verbindungen höchst ausfallsicher gemacht werden.

Dazu trägt weiter bei, dass aufgrund der hohen Temperaturbeständigkeit auch die Anschlussdrähte oder sonstige Kabelverbindungen mit Techniken angeschlossen werden, die mit höheren Temperaturen arbeiten und höhere Festigkeiten als bisher verwendbare Verbindungstechniken bieten.

Entsprechend ist dann auch ein Drucksensor oder Aktor bevorzugt, bei dem auch die weitere Kabelverbindung besonders langzeitstabil unempfindlich gegen Zug an dem Kabel und robust ausgeführt ist.

Dies wird bei einer besonders bevorzugten Ausführungsform dadurch erreicht, dass ein in üblicher Weise durch eine metallische Umhüllung abgeschirmtes Kabel mechanisch und elektrisch mittels einer Verkrimpung mit dem Gehäuse des Sensors oder Aktors verbunden wird. Hierzu wird das Kabel mit der Abschirmung über eine Klemmhülse in eine Gehäuseöffnung geführt und anschließend das Gehäuse und die Klemmhülse deformiert, beispielsweise aus einer runden in eine sechseckige Form gebracht. Die Klemmhülse gräbt sich dann in die Abschirmung des Kabels ein. Die Abschirmung des Kabels wird bevorzugt um die Klemmhülse außen herumgeführt und bei der Verkrimpung fest zwischen der Klemmhülse und dem Gehäuse eingeklemmt. Durch Verwendung eines Schrumpfschlauches und Klebstoff kann diese Verbindung dann dicht gemacht werden. Gleichzeitig erhöht dies zusätzlich die mechanische Festigkeit.

Damit lassen sich Festigkeitswerte erreichen, die eine Ausreißfestigkeit gegenüber einer 10 Kilo entsprechenden Zugkraft bei 100°C für ein Kabel mit 6 mm Durchmesser typischerweise bieten.

Ein Ausführungsbeispiel der Erfindung wird nachfolgend anhand der beigefügten Zeichnung näher erläutert. Darin zeigt:
- Fig. 1: eine Seitenansicht eines bei einem Sensor, insbesondere Drucksensor oder Aktor einsetzbaren Keramik-Metall-Verbundes;
- Fig. 2: eine Draufsicht auf den Verbund von Fig. 1;
- Fig. 3: eine perspektivische Ansicht des Keramik-Metall-Verbundes von Fig. 1;
- Fig. 4: eine perspektivische Ansicht eines den Keramik-Metall-Verbund der Fig. 1-3 verwendenden Drucksensors;
- Fig. 5: eine Draufsicht auf den Drucksensor von Fig. 4;
- Fig. 6: einen Schnitt durch den Sensor entlang der Linie VI-VI von Fig. 5;
- Fig. 7: einen Schnitt durch eine komplette Drucksensoreinheit mit dem Drucksensor von Fig. 6 mit einem äußeren Sensorgehäuse und einem Kabelanschluss; und
- Fig. 8: eine Detailansicht des Details A von Fig. 7.

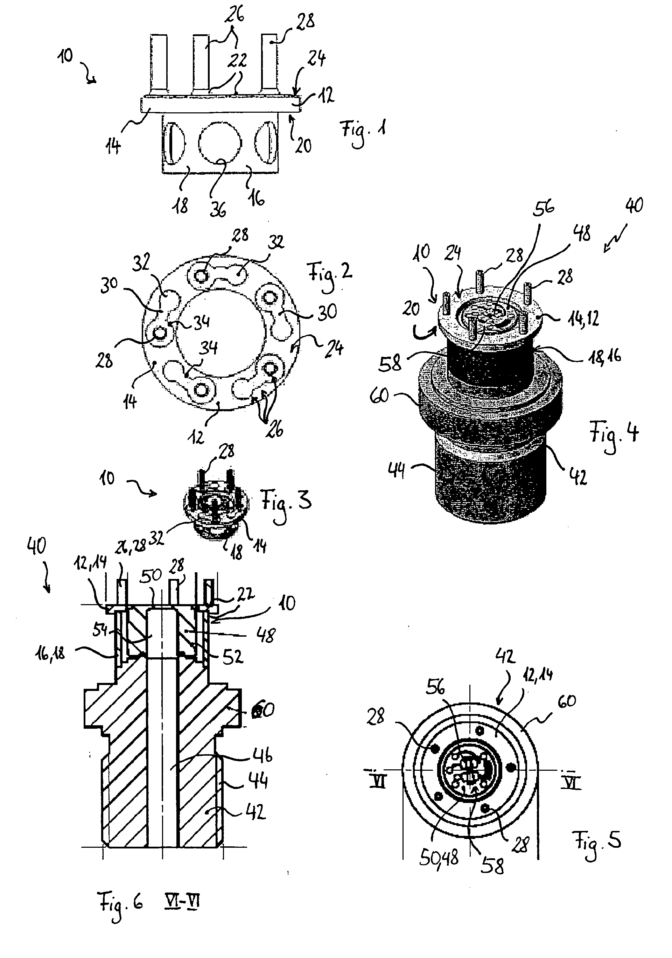

In den Fig. 1 - 3 ist eine bei Aktoren oder Sensoren verwendbare Struktur aus einem Keramik-Metallverbund gezeigt. Diese Metall-Keramik-Struktur 10 hat als ein erstes Teilelement 12 ein scheibenförmiges Substrat 14 aus Keramik. In dem dargestellten Beispiel ist das Keramik-Substrat 14 ringscheibenförmig ausgebildet.

An einer Unterseite des Keramik-Substrats 14 befindet sich als ein zweites Teilelement 16 eine Tragstruktur aus Metall in Form eines zylindermantelförmigen Metallringes 18. Der Metall-Ring 18 ist mittels eines Aktivlotes an eine erste Seite 20, hier die Unterseite, des Keramik-Substrats 14 gelötet und somit sehr fest und in hohem Maße temperaturbeständig mit dem Keramik-Substrat 14 verbunden. Mittels des Aktivlotes 22 ist außerdem auf einer gegenüberliegenden zweiten Seite 24 wenigstens ein Anschlusselement 26 gebildet oder mit dem Keramik-Substrat 14 verbunden. In dem dargestellten Beispiel sind mittels dem Aktivlot 22 mehrere Kabelendhülsen 28 zur Befestigung von zur elektrischen Leitung dienenden Drähten an die zweite Seite 24 des Keramik-Substrats 14 gelötet.

Mittels des Aktivlotes 22 sind außerdem auf der zweiten Seite 24 aus Aktivlot bestehende Leiterbahnen 30 und Bondpads 32 gebildet, mittels denen die Kabelendhülsen elektrisch kontaktiert werden können.

Die verwendeten Materialien sind beispielsweise Al₂O₃ für das Substrat 14 und Kupfer für den Metall-Ring 18 und die Kabelendhülsen 28. Als Aktivlot wird eine Lotmischung AgCuSnTiZr verwendet.

Zur Herstellung der Metall-Keramikstruktur 10 wird wie folgt vorgegangen: Zunächst wird das Keramik-Substrat 14 auf der ersten Seite 20 mittels Siebdruck oder Schablonendruck oder auch mittels gröberer Verfahren wie Aufsprühen, Dispensen oder Pinseln an der späteren Berührungsfläche mit dem Metallring 18 selektiv mit Aktivlot benetzt. Dann wird die zweite Seite 24 mittels einem genaueren Auftragsverfahren, beispielsweise mittels Siebdruck oder Schablonendruck, an den aus Fig. 2 ersichtlichen ausgewählten Bereichen 34, die die Bondpads 32, die Leiterbahnen 30 und die Verbindungsstellen mit den Kabelendhülsen 28 bilden, mit dem Aktivlot 22 versehen. Anschließend werden der Metallring 18, das Keramik-Substrat 14 und die Kabelendhülsen 28 in der gewünschten Weise zusammengefügt und fixiert. Die so fixierte Struktur wird in einem Ofen hartgelötet, und zwar bei Temperaturen von über ca. 1000°C, vorzugsweise bei ca. 1200°C ± 100°C.

Die so geschaffenen Verbindungen Metall-Keramik haben eine maximale Zugfestigkeit von typischerweise etwa 5 N und Scherfestigkeit von etwa 1 N. Damit liegt die Festigkeit der Verbindung zum Teil höher als die verwendeten Grundwerkstoffe Al₂O₃ und Cu.

Auf der zweiten Seite 24 erfüllt das Aktivlot 22 mehrere Funktionen. Neben der Fügeverbindung der Kabelendhülsen 28 mit dem Keramik-Substrat 14 wird gleichzeitig das Aktivlot 22 auch für die elektrische Kontaktierung der Kabelendhülsen 28 verwendet.

Beispielsweise können in die Bondpads 32 bei dem Aktivlötens auch noch weitere metallische Leiterstücke (nicht dargestellt) eingelötet werden, die später zu aktiven Teilen des Sensors oder Aktors, welche innerhalb der Metall-Keramik-Struktur 10 unterzubringen sind, führen und dort eine elektrische Verbindung darstellen.

In den Fig. 4 - 6 ist der druckerfassende Teil eines Drucksensors 40 als Anwendungsbeispiel für die Metall-Keramik-Struktur 10 gezeigt. Wie am besten aus Fig. 6 ersichtlich, hat dieser aktive Teil des Drucksensors 40 ein Anschraubgehäuse 42 mit einem Gewinde 44 und einer Durchgangsbohrung 46. An dem dem Gewinde 44 entgegengesetzten Ende der Durchgangsbohrung 46 ist eine Druckmesszelle 48 mit einer Druckmembran 50 vorgesehen. Die Druckmesszelle 48 ist einstückig aus Stahl gebildet und hat eine mit dem Anschraubgehäuse 42 verbundene ringförmige Stützstruktur 52, die einstückig mit der Membran 50 ausgebildet ist. An dem einer mit der Durchgangsbohrung 46 fluchtenden Sackbohrung 54 abgewandten Seite der Membran sind Dehnmessstreifen 56 vorgesehen, die eine Auslenkung der Membran erfassen. Die Dehnmessstreifen 56 sind, wie es Stand der Technik ist, Teil einer Brückenschaltung 58, welche auf dieser Seite der Membran 50 ausgebildet ist. Die so ausgebildete Druckmesszelle 48 ist innerhalb der Metall-Keramik-Struktur 10 angeordnet. Hierzu ist der Metall-Ring 18 auf dem dem Gewinde 44 abgewandten Ende des Anschraubgehäuses 42 aufgesetzt und fest verbunden. Das Keramik-Substrat 14 dient als Wärmeisolator und als Fixierung der Verkabelung und der Druckmesszelle 48. Die Kontakte der Brückenschaltung 58 sind über die Bondpads 32 elektrisch mit jeweiligen Kabelendhülsen 28 verbunden (nicht dargestellt).

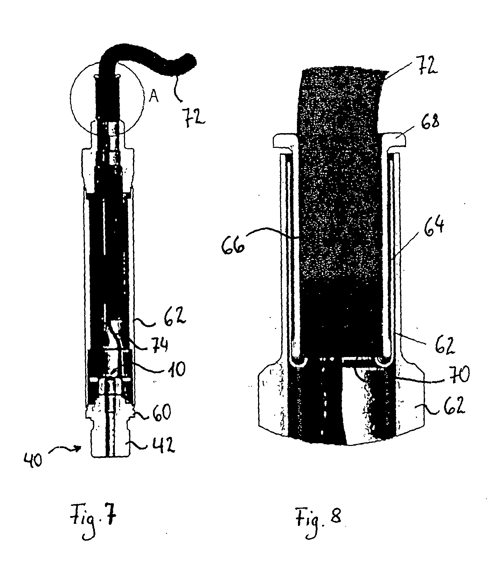

In Fig. 7 ist die Gesamtstruktur des Drucksensors 40 gezeigt, bei der auf das Anschraubgehäuse 42, angreifend an einem radial nach außen vorstehenden Ringflansch 60 ein Sensorgehäuse 62 aufgesetzt ist. Das Sensorgehäuse 62 hat die Form eines länglichen Röhrchens und beinhaltet Einzeldrähte zum Kontaktieren der Sensorelektronik - hier z.B. der Brückenschaltung 58. Diese Einzeldrähte sind mit einem Mikro-Laserschweißverfahren auf den Kabelendhülsen 28 aufgeschweißt. An dem den Anschraubgewinde 62 abgewandten Ende des Sensorgehäuses 62 ist eine Kabelverbindung vorgesehen, die im Detail in Fig. 8 gezeigt ist. Ein Anschlusskabel 72 hat eine äußere metallische Abschirmung 64, die koaxial um die Kontaktdrähte geführt ist. Die Kabeloberfläche über der Abschirmung 64 wird durch eine Isolierung 66 gebildet. Um diese Isolierung 66 ist am Kabelende 70 eine Klemmhülse 68 geführt. Die Abschirmung 64 reicht hier über die Isolierung 66 hinaus und ist um die Klemmhülse 68 herum zurückgefaltet, wie dies in Fig. 8 dargestellt ist. Diese Struktur von eingeführtem Kabelende 70 mit Klemmhülse 68 und außen anliegender Abschirmung 64 wird in das offene Ende des Sensorgehäuses 62 eingeführt. Sodann wird das Sensorgehäuse 62 von einer anfänglich runden Form mit Abflachungen eingezogen, beispielsweise zu einem Sechskant verkrimpt. Aufgrund dieser Verkrimpung verformt sich auch die Klemmhülse 68. Dies ergibt einen guten Kontakt des metallischen Sensorgehäuses 62 mit der Abschirmung 64 und damit eine gute Erdung. Gleichzeitig wird die Klemmhülse 68 mitverformt, so dass das Kabelende 70 fest verklemmt wird. Die in Fig. 8 gezeigte Struktur wird dann noch mit einem Schrumpfschlauch (nicht dargestellt), der innenseitig mit Klebstoff versehen ist, überzogen. Nach Aufschrumpfen des Schrumpfschlauches ergibt sich eine dichte Verbindung und eine zusätzliche mechanische Festigkeit.

Durch die Verkrimpung des Sensorgehäuses 62 in eine zum Beispiel sechseckige Form wird der Schirm oder die Abschirmung 64 des Kabels 72 mechanisch und elektrisch mit dem Sensorgehäuse (Erdung) und der Klemmhülse 68 verbunden. Die Klemmhülse 68 wird ebenfalls deformiert und erhöht somit die Kabelausreißfestigkeit durch die dadurch entstehende Klemmung des Kabels 62. Durch Verwendung des Schrumpfschlauches (nicht dargestellt) in Zusammenhang mit Klebstoff wird die Kabelverbindung dicht gemacht und zusätzlich die mechanische Festigkeit erhöht. Typische Festigkeitswerte einer solchen Struktur sind 10 kg Ausreißfestigkeit bei 100°C für ein Kabel 72 mit 6 mm Durchmesser.

In nicht dargestellten Ausführungsbeispielen ist auf ein flächiges Keramik-Substrat direkt ein elektronisches Bauelement aufgebracht und mittels der aus Aktivlot gebibleten elektrisch leitfähigen Verbindungen elektrisch und mechanisch verbunden. Weiter gibt es nicht dargestellte Ausführungen, bei denen zur Verbesserung des Bondprozesses eine weitere Beschichtung mit einem zusätzlichen leitfähigen Stoff und/oder ein zusätzliches Bauteil oder ein zusätzliches Stück aus einem elektrisch leitfähigen Material, beispielsweise ein Nickelplättchen, verwendet wird. Solch ein zusätzliches Stück aus leitfähigen Material, in der Regel aus Metall, lässt sich formschlüssig oder stoffschlüssig mit der Lotpaste aufbringen. Analog zu dem dargestellten Drucksensor lässt sich auch ein Aktor (nicht dargestellt) aufbauen.

Die hier dargestellte Verbindungstechnik schafft elektrische und mechanische Verbindung, die hochtemperaturfest und langzeitstabil sind. Es ist auch denkbar, diese speziell lediglich zur Verbesserung der Festigkeit und Langzeitstabilität der elektrischen Verbindungen auch dort vorzusehen, wo es bisher nicht nötig war, eine Metall-Keramik-Struktur zu verwenden.

Beispielsweise Einsatzbereiche mit solchen Metall-Keramik-Aktivlot-Elektroverbindungen sind Gasmotoren oder Großmotoren, beispielsweise zur Stromerzeugung. Typische Betriebstemperaturen liegen hier in der Größenordnung von 250°C und damit weit unterhalb dessen, was die hier vorgestellte elektrische Verbindungstechnik aushalten kann.

### BEZUGSZEICHENLISTE

- 10: Metall-Keramik-Struktur
- 12: erstes Teilelement
- 14: Keramik-Substrat
- 16: zweites Teilelement
- 18: Metallring
- 20: erste Seite
- 22: Aktivlot
- 24: zweite Seite
- 26: Anschlusselement
- 28: Kabelendhülsen
- 30: Leiterbahnen
- 32: Bondpads
- 34: zum Auftragen von Aktivlot ausgewählte Bereiche
- 36: Durchgangsöffnungen
- 40: Drucksensor
- 42: Anschraubgehäuse
- 44: Gewinde
- 46: Durchgangsbohrung
- 48: Druckmesszelle aus Stahl
- 50: Membran
- 52: Ringstütz-Struktur
- 54: Sackbohrung
- 56: Dehnmessstreifen
- 58: Brückenschaltung
- 60: Ringflansch
- 62: Sensorgehäuse
- 64: Abschirmung
- 66: Isolierung
- 68: Klemmhülse
- 70: Kabelende
- 72: Kabel
- 74: Anschlussdraht

## Patentansprüche

1. Verfahren zum Herstellen eines Sensors (40) oder Aktors, bei welchem ein erstes aus Keramik gebildetes Teilelement (12) oder Bauteil (14) des Sensors (40) oder Aktors mittels Hart- und/oder Aktivlöten mit einem zweiten Teilelement (16) oder Bauteil (18) verbunden wird,
**dadurch gekennzeichnet,**
**dass** das Hart- oder Aktivlot (22) zusätzlich zum Herstellen elektrischer Verbindungen (30, 32) und/oder elektrischer Leiterbahnen (30) verwendet wird.

2. Verfahren nach Anspruch 1,
**dadurch gekennzeichnet,**
**dass** das aus Keramik gebildete erste Teilelement (12) oder Bauteil als Substrat (14) verwendet wird, auf dem elektrische Verbindungselemente (26, 30, 32, 28) mittels Hart- oder Aktivlot (22) hergestellt oder befestigt werden.

3. Verfahren nach einem der voranstehenden Ansprüche,
**dadurch gekennzeichnet,**
**dass** das Keramik-Teilelement (12) oder Bauteil (14) auf einer ersten Seite (20) mit dem zweiten Teilelement (16) oder Bauteil (18) mittels Hart- oder Aktivlot (22) verbunden wird und auf einer zweiten Seite (24) mittels dem Hart-oder Aktivlot (22) Anschlusselemente (26) angebracht oder hergestellt werden.

4. Verfahren nach einem der voranstehenden Ansprüche,
**dadurch gekennzeichnet,**
**dass** die elektrischen Verbindungen (30, 32) oder Anschlusselemente (26) aus Hart- oder Aktivlot (22) bestehende Leiterbahnen (30) und/oder mittels Hart- oder Aktivlot (22) an das erste Teilelement (12) oder Bauteil (14) angelötete Kabelendhülsen (28) oder Bondpads (32) aufweisen.

5. Verfahren nach einem der voranstehenden Ansprüche,
**dadurch gekennzeichnet,**
**dass** das Hart- oder Aktivlot (22)zum Bilden der Lotverbindungen mit elektrischen Anschlusselementen (26) und/oder zum Bilden von elektrischen Leiterbahnen (30) oder von Bondpads (32) auf ausgewählte Bereiche selektiv aufgetragen wird.

6. Verfahren nach Anspruch 5,
**dadurch gekennzeichnet,**
**dass** das selektive Auftragen mittels Siebdruck oder Schablonendruck erfolgt.

7. Verfahren nach einem der voranstehenden Ansprüche,
**dadurch gekennzeichnet,**
**dass** anschließend an das Auftragen des Hart- oder Aktivlots (22) die beiden Teilelemente (12, 16) oder Bauteile (14, 18) und wenigstens ein elektrisches Anschlusselement (26), das über die aus Hart- oder Aktivlot (22) zu bildenden elektrischen Verbindungen (30) mit dem ersten Teilelement (12) oder Bauteil zu verbinden ist, zusammengefügt und lagefixiert werden und anschließend zum Hart- oder Aktivlöten erhitzt werden.

8. Verfahren nach einem der voranstehenden Ansprüche,
**dadurch gekennzeichnet,**
**dass** ein Aktivlot (22) mit erhöhter elektrischer Leitfähigkeit, insbesondere eine Lotmischung AgCuSnTiZr, verwendet wird.

9. Verfahren nach einem der voranstehenden Ansprüche,
**dadurch gekennzeichnet,**
**dass** zur Verbesserung der elektrischen Verbindung über das Hart- oder Aktivlot (22) ein zusätzliches Bauteil aus elektrisch leitfähigen Material und/oder eine zusätzliche Beschichtung verwendet wird.

10. Verfahren nach Anspruch 9,
**dadurch gekennzeichnet,**
**dass** das zusätzliche Bauteil formschlüssig mit der Lotpaste aufgebracht wird.

11. Verfahren nach einem der voranstehenden Ansprüche,
**dadurch gekennzeichnet,**
**dass** an ein mittels Hart- oder Aktivlöten (22) mit dem ersten Teilelement (12) oder Bauteil fest verbundene und elektrisch kontaktierte Anschlusselement (26) eine elektrische Leitungseinrichtung (74) mittels einer Verbindungstechnik angebracht wird, die Temperaturen oberhalb von ca. 300°C, insbesondere oberhalb von ca. 400-500 °C benötigt.

12. Verfahren nach einem der voranstehenden Ansprüche,
**dadurch gekennzeichnet,**
**dass** mittels Hart- oder Aktivlot (22) aneinandergefügte Einheit (10) in einem Gehäuse (62) untergebracht wird, das eine Öffnung aufweist, in der ein Anschlusskabel (72) mit elektrisch leitfähiger Abschirmung (64) unter Zwischenlage einer Klemmhülse (68) eingefügt und derart verkrimpt wird, dass das Gehäuse (62), die Klemmhülse (68) und die Abschirmung (64) fest miteinander verklemmt und elektrisch kontaktiert werden.

13. Verfahren nach Anspruch 12,
**dadurch gekennzeichnet,**
**dass** die Verbindung zwischen Anschlusskabel (72) und Gehäuse (62) mittels eines Schrumpfschlauches und Klebstoffes abgedichtet und verstärkt wird.

14. Aktor oder Sensor (40), herstellbar mit einem Verfahren nach einem der voranstehenden Ansprüche, mit
einem ersten Teilelement (12) oder Bauteil aus Keramik;
einem zweiten Teilelement (16) oder Bauteil, insbesondere aus Keramik oder Metall, das mittels Hart- oder Aktivlot (22) fest mit dem ersten Teilelement (12) oder Bauteil verbunden ist, und wenigstens einem elektrischen Anschlusselement (26), das mittels Hart- oder Aktivlot (22) hergestellt und/oder mittels Hartlot oder Aktivlot (22) mit einem der beiden Teilelemente (12, 16) mechanisch und elektrisch verbunden sind.

15. Aktor oder Sensor (40) nach Anspruch 14,
**dadurch gekennzeichnet,**
**dass** das erste Teilelement (12) ein aus Keramik gebildetes Substrat (14) ist, an dem als elektrische Anschlusselemente (26) Kabelendhülsen (28), Pins, Bondpads (32) und/oder Leiterbahnen (30) aus Hart- oder Aktivlot (22) gebildet und/oder mit Hart- oder Aktivlot (22) befestigt sind, wobei die Anschlusselemente (26) über das Hart- oder Aktivlot (22) elektrisch kontaktierbar sind.
